# FASCICULE DE BREVET EUROPEEN

(11) **EP 4 100 885 B1**
(45) Date de publication et mention de la délivrance du brevet: **03.09.2025**
(21) Numéro de dépôt: 21702518.8
(22) Date de dépôt: 05.02.2021
(51) Int. Cl.: G06N 3/049, G06N 3/065

(54) **DISPOSITIF DE CLASSIFICATION, ENSEMBLE DE CLASSIFICATION ET PROCÉDÉ DE CLASSIFICATION ASSOCIÉ**
KLASSIFIZIERUNGSVORRICHTUNG, KLASSIFIZIERUNGSSYSTEM UND ZUGEHÖRIGES KLASSIFIZIERUNGSVERFAHREN
CLASSIFICATION DEVICE, CLASSIFICATION SET AND ASSOCIATED CLASSIFICATION METHOD

(30) Priorité: 06.02.2020 FR 2001162
(43) Date de publication de la demande: 14.12.2022
(73) Titulaire: THALES, 92400 Courbevoie (FR); Centre national de la recherche scientifique, 75016 Paris (FR)
(72) Inventeur: ROMERA, Miguel, Álvaro, 91767 PALAISEAU (FR); TALATCHIAN, Philippe, 91767 PALAISEAU (FR); TRASTOY, Juan, 91767 PALAISEAU (FR); BORTOLOTTI, Paolo, 91767 PALAISEAU (FR); GROLLIER, Julie, 91767 PALAISEAU (FR)
(74) Mandataire: Lavoix
(86) Numéro de dépôt international: PCT/EP2021/052767
(87) Numéro de publication internationale: WO 2021/156419

(56) Documents cités:
- SENGUPTA ABHRONIL ET AL: "Spin orbit torque based electronic neuron", APPLIED PHYSICS LETTERS, A I P PUBLISHING LLC, US, vol. 106, no. 14, 6 April 2015 (2015-04-06), XP012196300, ISSN: 0003-6951, [retrieved on 19010101], DOI: 10.1063/1.4917011
- CHAMIKA M LIYANAGEDERA ET AL: "Magnetic Tunnel Junction Enabled Stochastic Spiking Neural Networks: From Non-Telegraphic to Telegraphic Switching Regime", ARXIV.ORG, CORNELL UNIVERSITY LIBRARY, 201 OLIN LIBRARY CORNELL UNIVERSITY ITHACA, NY 14853, 26 September 2017 (2017-09-26), XP080823836, DOI: 10.1103/PHYSREVAPPLIED.8.064017
- MIGUEL ROMERA ET AL: "Vowel recognition with four coupled spin-torque nano-oscillators", NATURE, vol. 563, no. 7730, 29 October 2018 (2018-10-29), London, pages 230 - 234, XP055766447, ISSN: 0028-0836, DOI: 10.1038/s41586-018-0632-y
- ALEKSANDR KURENKOV ET AL: "Artificial Neuron and Synapse Realized in an Antiferromagnet/Ferromagnet Heterostructure Using Dynamics of Spin-Orbit Torque Switching", ADVANCED MATERIALS, vol. 31, no. 23, 16 April 2019 (2019-04-16), pages 1900636, XP055766343, ISSN: 0935-9648, DOI: 10.1002/adma.201900636

## Description

La présente invention concerne un dispositif de classification de signaux. La présente invention concerne également un ensemble de classification de signaux et un procédé de classification de signaux.

Pour de nombreuses applications, il est utile de pouvoir classifier les signaux. A titre d'exemple, il peut être prévu d'appliquer un traitement spécifique selon le type de signaux.

De nombreux classificateurs de signaux ont ainsi été développés. En particulier, l'utilisation des réseaux de neurones pour réaliser des classificateurs a évolué, notamment du point de vue de la faisabilité.

Ainsi, il est connu d'utiliser des composants de type CMOS pour émuler des synapses et/ou des neurones. Il est entendu par le sigle CMOS, oxyde métallique semiconducteur complémentaire (« Complementary Metal-Oxyde-Semiconductor » en anglais »).

Cependant, de très nombreux transistors et composants passifs doivent être utilisés pour émuler un seul neurone ou une seule synapse.

Ainsi, la technologie CMOS connaît ses limites lorsqu'il s'agit d'émuler un nombre important de neurones, tel que 10¹¹ neurones comme cela est le cas dans le cerveau humain.

En outre, les neurones CMOS ont l'inconvénient de présenter des dimensions trop importantes, de l'ordre de 10 micromètres à 100 micromètres lorsqu'il s'agit de fabriquer des réseaux de neurones à grande échelle.

De ce fait, de nombreuses alternatives ont été étudiées, telles que l'utilisation de circuits nanophotoniques, de memristors ou encore d'oscillateurs CMOS.

Il est également connu des dispositifs comprenant des neurones, un réseau de barres transversales (« crossbar network » en anglais) d'alimentation des neurones et des memristors de l'article de Sengupta Abhronil et al., intitulé « Spin Orbit torque based electronic neuron » et de l'article de Chamika M Liyanagedera et al. intitulé « Magnetic Tunnel Junction Enabled Stochastic Spiking Neural Networks : From Non-Telegraphic to Telegraphic Switching Regime *».*

Cependant, ces dispositifs présentent de nombreux inconvénients parmi lesquels : un fort encombrement, une consommation électrique importante, une durée de vie trop limitée et/ou des performances de classifications insuffisantes.

Il existe donc un besoin pour un dispositif de classification ayant un encombrement réduit, comprenant un nombre élevé de neurones et présentant une faible consommation électrique.

A cet effet, la description propose un dispositif de classification de signaux, chaque signal étant destiné à être classé dans une catégorie prédéfinie correspondant à ce signal, au moins une plage de courants prédéfinis étant associée à chaque catégorie prédéfinie, le dispositif comprenant au moins une chaîne de neurones comportant un ensemble de neurones, chaque neurone ayant une aimantation propre à présenter une première configuration et une deuxième configuration, les neurones d'une chaîne étant connectés en série les uns aux autres, au moins un neurone de l'au moins une chaîne de neurones étant, en outre, associé à une catégorie prédéfinie, une entrée propre à recevoir des courants d'entrée représentatifs des signaux à classer et destinés à alimenter l'au moins une chaîne de neurones, l'aimantation d'au moins un neurone de l'au moins une chaîne de neurones étant propre à passer d'une configuration à une autre configuration parmi la première configuration et la deuxième configuration en fonction d'un courant d'entrée appliqué à l'au moins une chaîne de neurones, le passage d'une configuration à une autre configuration pour l'au moins un neurone ayant lieu lorsque qu'un courant d'entrée appartenant à l'au moins une plage de courants prédéfinis d'une catégorie prédéfinie associée à l'au moins un neurone est appliqué audit neurone.

Il est à noter qu'une chaîne de neurones dans laquelle les neurones sont connectés en série les uns aux autres permet une architecture plus simple du dispositif de classification. En effet, il est possible de s'affranchir des memristors et du réseau de barres transversales. Ainsi, le dispositif de classification est plus simple à fabriquer que celui décrit dans ledit article.

En outre, le dispositif de classification permet de mettre en oeuvre un procédé de classification basé sur la mémoire associative (« associative memory » en anglais). Un tel procédé basé sur la mémoire associative est plus simple qu'un procédé basé sur l'apprentissage profond (« deep learning » en anglais) et plus efficace énergétiquement.

Suivant des modes de réalisation particulier, le dispositif comprend une ou plusieurs des caractéristiques suivantes lorsque cela est techniquement possible:
- chaque courant d'entrée est une impulsion de courant.
- chaque neurone est un commutateur, chaque neurone étant un commutateur choisi dans la liste suivante de commutateurs un commutateur comprenant une jonction tunnel magnétique, un commutateur présentant un couple spin-orbite, chaque neurone comprenant une première couche en un premier matériau et une deuxième couche en un deuxième matériau, le premier matériau étant en l'un des matériaux parmi un métal lourd et un matériau ferromagnétique et le deuxième matériau étant dans l'autre des matériaux parmi le métal lourd et le matériau ferromagnétique, la première couche et la deuxième couche étant superposées le long d'une direction d'empilement des couches et un commutateur comprenant une première couche et au moins une deuxième couche, la première couche étant en un métal lourd et l'au moins une deuxième couche étant formée par une jonction tunnel magnétique, la première couche et la deuxième couche étant empilées selon une direction d'empilement des couches.
- au moins deux neurones de la chaîne présentent une caractéristique différente choisie parmi le diamètre et l'épaisseur.
- le dispositif de classification comprend une unique chaîne de neurones, l'entrée étant destinée à alimenter l'unique chaîne de neurones par les courants d'entrée représentatifs des signaux à classer de manière successive.

La présente invention concerne également un ensemble de classification de signaux propre à classer chaque signal dans une catégorie prédéfinie correspondant à ce signal, l'ensemble comprenant un dispositif de classification tel que décrit précédemment, un circuit d'entrée électriquement connecté à l'entrée du dispositif de classification, le circuit d'entrée étant propre à encoder les signaux à classer dans des courants d'entrée et à injecter les courants d'entrée dans le dispositif de classification, et un circuit de sortie électriquement connecté au dispositif de classification, le circuit de sortie comprenant une mémoire et un circuit de détection et d'association, la mémoire étant propre à mémoriser une liste de catégories prédéfinies, chaque catégorie prédéfinie étant associée à au moins une plage de courants prédéfinis et au moins un neurone de l'au moins une chaîne de neurones étant associé à une catégorie prédéfinie, et le circuit de détection et d'association étant propre à détecter au moins un changement de configuration d'aimantation d'au moins un neurone de l'ensemble de neurones et à associer l'au moins un neurone présentant un changement de configuration d'aimantation à une catégorie prédéfinie sur la base de la liste de catégories prédéfinies.

Suivant des modes de réalisation particulier, l'ensemble de classification comprend une ou plusieurs des caractéristiques suivantes lorsque cela est techniquement possible:
- le circuit d'entrée comprend une unité d'encodage configurée pour encoder les signaux à classer dans les courants d'entrée.
- l'ensemble comprend un circuit d'ajustement de l'aimantation de chacun des neurones, le circuit d'ajustement étant connecté électriquement à l'au moins une chaîne de neurones, le circuit d'ajustement étant propre à injecter des courants d'ajustement différents dans chaque neurone, les courants d'ajustement étant propres à contrôler la valeur du courant alimentant chaque neurone de l'au moins une chaîne et un circuit de synchronisation connecté entre le circuit d'entrée et le circuit d'ajustement pour synchroniser l'injection des courants d'entrée et des courants d'ajustement dans les neurones.

La présente invention concerne un procédé de classification de signaux dans des catégories mis en œuvre par un ensemble de classification tel que décrit précédemment, chaque signal à classer étant destiné à être classé dans une catégorie prédéfinie correspondant à ce signal, le procédé comprenant une phase d'exploitation de l'ensemble de classification, la phase d'exploitation comprenant les étapes suivantes: fournir au circuit d'entrée au moins un signal à classer, fournir au circuit de sortie une liste de catégories prédéfinies, chaque catégorie prédéfinie étant associée à au moins une plage de courants prédéfinis et au moins un neurone de la chaîne de neurones étant associé à une catégorie prédéfinie, le passage d'une configuration à une autre configuration pour l'au moins un neurone ayant lieu lorsque qu'un courant d'entrée appartenant à l'au moins une plage de courants prédéfinis d'une catégorie prédéfinie associée à l'au moins un neurone est appliqué audit neurone, convertir l'au moins un signal à classer en au moins un courant d'entrée avec le circuit d'entrée, injecter l'au moins un courant d'entrée à l'entrée du dispositif de classification avec le circuit d'entrée, détecter un changement de configuration d'aimantation d'au moins un neurone de l'au moins une chaîne de neurones avec le circuit de détection et d'association suite à l'injection de l'au moins un courant d'entrée, associer l'au moins un neurone présentant un changement de configuration d'aimantation à une catégorie prédéfinie sur la base de la liste de catégories prédéfinies avec le circuit de détection et d'association, et classer l'au moins un signal à classer dans ladite catégorie prédéfinie, le procédé comprenant, de préférence, une phase initiale au cours de laquelle une ou plusieurs caractéristique(s) des neurones de l'au moins une chaîne de neurones sont déterminées en fonction de la liste de catégories prédéfinies.

Suivant un mode de réalisation particulier, lorsque l'au moins un signal à classer est classé dans une catégorie prédéfinie erronée, le procédé comprend, en outre, une étape d'apprentissage pour contrôler le changement de configuration d'aimantation d'au moins un neurone de l'au moins une chaîne de neurones en envoyant à nouveau le signal à classer et en injectant avec le circuit d'ajustement au moins un courant d'ajustement dans l'au moins un neurone de l'au moins une chaîne de neurones.

D'autres caractéristiques et avantages de l'invention apparaîtront à la lecture de la description qui suit des modes de réalisation de l'invention donnée à titre d'exemple uniquement et en référence aux dessins qui sont :
- figure 1, une représentation schématique d'un ensemble de classification de signaux,
- figure 2, une représentation schématique d'une chaîne de neurones,
- figure 3, une représentation schématique d'un neurone,
- figure 4, une vue en coupe et en perspective du neurone de la figure 3,
- figure 5, une représentation schématique d'un autre exemple de neurone,
- figure 6, une représentation schématique d'encore un autre exemple de neurone,
- figure 7, une représentation schématique d'une chaîne de neurone et d'un circuit d'ajustement,
- figure 8, un schéma synoptique d'un procédé de classification,
- figure 9, un graphique montrant une liste de catégories prédéfinies dans lesquelles les signaux sont propres à être classés,
- figure 10, une représentation schématique de la liste de catégories prédéfinies et deux signaux à classer superposés sur la liste, et
- figure 11, une représentation schématique d'une pluralité de chaînes de neurones.

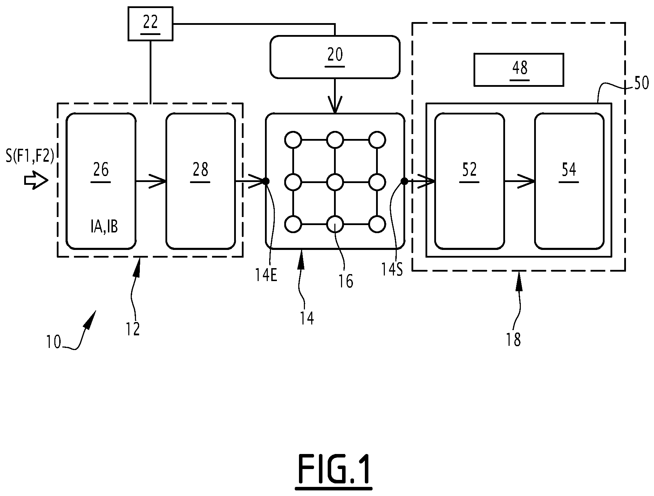

Un ensemble 10 de classification de signaux S est représenté sur la figure 1.

L'ensemble 10 de classification est propre à classer chaque signal S dans une catégorie prédéfinie correspondant à ce signal S.

Par exemple, chaque signal S est un signal sonore.

Par exemple, chaque signal S est un phonème d'une voyelle aussi appelée « voyelle parlée ». Un tel signal S correspond au son « ah », « oh », « eh », « ou », « en », « au ».

Dans d'autres exemples, les signaux S sont des consonnes parlées.

Selon encore d'autres exemples, les signaux S sont des signaux lumineux ou des images.

Chaque catégorie prédéfinie identifie le signal S à classer. Dans le cas d'une voyelle parlée, l'une des catégories est, par exemple, la catégorie « ah » dans laquelle le signal « ah » est destiné à être classé, une autre catégorie est par exemple la catégorie « eh » dans laquelle le signal « eh » est propre à être classé, etc.

Dans l'exemple décrit, l'ensemble 10 de classification est propre à reconnaître la voyelle parlée en l'associant à la catégorie prédéfinie correspondant à cette voyelle parlée.

L'ensemble 10 de classification est, en outre, propre à mémoriser une liste de catégories C prédéfinies répertoriant les différentes catégories dans lesquelles les signaux S sont destinés à être classés.

Chaque signal S à classer est associé à une catégorie C prédéfinie de la liste.

En outre, au moins une plage d'une grandeur physique prédéfinie est associée à chaque catégorie C prédéfinie.

En l'espèce, une telle mémorisation est la mémorisation de seuils pour la grandeur physique prédéfinie.

Chaque plage est délimitée par deux seuils Z1 et Z2. La grandeur physique est donc comprise entre les valeurs Z1 et Z2. Cela signifie que la grandeur physique est supérieure ou égale à Z1 et strictement inférieure à Z2.

Dans le présent exemple de réalisation, la grandeur physique est un courant électrique.

En variante, la grandeur physique est une amplitude d'une impulsion de courant électrique, d'un courant continu ou d'un courant sinusoïdal.

Encore variante, la grandeur physique est une largeur d'impulsion de courant électrique. Il est entendu par « largeur d'impulsion », la durée temporelle de l'impulsion.

En outre, chaque plage est associée à un courant électrique distinct.

Comme visible sur la figure 1, l'ensemble de classification 10 comprend un circuit d'entrée 12, un dispositif de classification 14 comprenant un ensemble de neurones 16, un circuit de sortie 18, un circuit d'ajustement 20 et un circuit de synchronisation 22.

Le circuit d'entrée 12 est électriquement connecté au dispositif de classification 14.

Le circuit d'entrée 12 comprend une unité d'encodage 26 et une unité d'injection 28.

L'unité d'encodage 26 est, par exemple, réalisée sous la forme d'un circuit CMOS (acronyme pour Complementary Metal Oxyde Semiconductor) ou d'un dispositif résistif programmable.

L'unité d'encodage 26 est propre à encoder ou convertir chaque signal S à classer en des courants. Chaque courant forme un courant d'entrée.

Chaque courant d'entrée comprend au moins une impulsion de courant présentant une amplitude, notée dans la suite IA, IB respectivement.

Par la suite, chaque courant d'entrée est aussi repéré par les références IA, IB respectivement.

L'unité d'injection 28 est, par exemple, réalisée sous la forme d'un circuit CMOS de neurones impulsionnels (connus sous le nom de « spiking neurons » en anglais).

L'unité d'injection 28 est propre à injecter les courants d'entrée IA, IB dans le dispositif de classification 14.

Le circuit d'entrée 12 est donc propre à encoder les signaux S à classer dans des courants d'entrée et à injecter les courants d'entrée IA, IB dans le dispositif de classification 14.

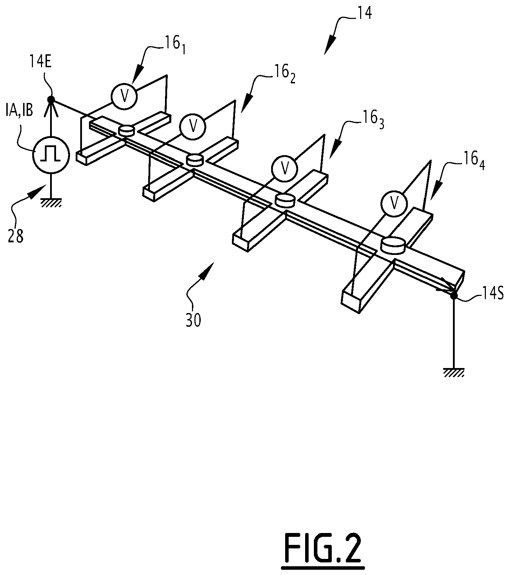

Le dispositif de classification 14 comprend une entrée 14E, au moins une chaîne 30 de neurones 16 (notamment visible sur la figure 2) et une sortie 14S.

L'entrée 14E est électriquement connectée au circuit d'entrée 12.

L'entrée 14E est propre à recevoir les courants d'entrée IA, IB représentatifs des signaux S à classer.

En outre, l'entrée 14E est électriquement connectée à la chaîne 30. Aussi, l'entrée 14E est destinée à alimenter la chaîne 30 avec chaque courant d'entrée IA, IB reçu.

Selon le mode de réalisation de la figure 2, le dispositif de classification 14 comprend une unique chaîne 30 de neurones 16.

En variante, le dispositif de classification 14 comprend au moins deux chaînes 30 de neurones.

Les neurones 16 d'une chaîne 30 sont connectés en série les uns aux autres.

La chaîne 30 comprend un nombre N1 de neurones.

En particulier, le nombre N1 maximal de neurones 16 correspond à la plage complète de la grandeur physique utilisée pour coder le signal (dans le cas d'espèce les courants d'entrée IA, IB) divisée par la taille de chaque catégorie qui est égale à Z2-Z1.

Par exemple, N1 est un nombre entier compris entre 4 et 1000.

Chaque neurone 16 de la chaîne 30 est identifié par son numéro d'ordre dans la chaîne 30 depuis l'entrée 14E vers la sortie 14S du dispositif de classification 14.

Par exemple, les neurones 16 sont repérés par un indice j, j étant un nombre entier variant entre 1 et N1. Ainsi, dans la suite de la description, pour désigner un neurone donné, la référence 16ⱼ est utilisée alors que pour désigner un neurone en général, la référence 16 est utilisée.

Dans le cas d'espèce, N1 est égal à quatre. Ainsi, les neurones sont identifiés par les références 16₁, 16₂, 16₃, 16₄.

Au moins un neurone 16 de l'au moins une chaîne de neurones 16 est associé à au moins une catégorie C prédéfinie.

En outre, pour chaque catégorie C prédéfinie à laquelle au moins un neurone 16 est associé, chaque neurone 16 est associé à une plage de courant respective associée à cette catégorie C.

Plus généralement, le nombre N1 de neurones 16 de la chaîne 30 dépend du nombre de catégories C.

Chaque neurone 16 est un élément de commutation aussi appelé « commutateur ».

Chaque neurone 16 est propre à présenter une première configuration d'aimantation et une deuxième configuration d'aimantation.

En physique, l'aimantation est une grandeur vectorielle qui caractérise à l'échelle macroscopique le comportement magnétique d'un échantillon de matière. L'aimantation a comme origine le moment magnétique orbital et le moment magnétique de spin des électrons.

Pour chaque élément de commutation, le passage d'une configuration d'aimantation à une autre configuration d'aimantation se produit lorsqu'un courant strictement supérieur à un courant seuil défini pour cet élément de commutation, aussi appelé courant critique, est appliqué à cet élément.

Par exemple, le passage d'une configuration d'aimantation à une autre configuration d'aimantation pour le neurone 16 se traduit par un changement de la direction d'aimantation d'au moins une couche de matériau formant le neurone 16 et/ou un changement d'intensité de l'aimantation.

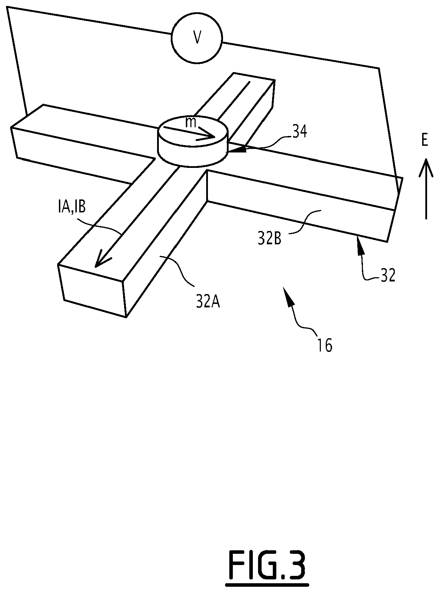

Sur les figures 3 à 5, l'aimantation est représentée par une flèche m.

Plusieurs modes de réalisation de neurones 16 permettant un passage entre deux configurations d'aimantation sont maintenant décrits.

En outre, dans la suite de la description, il est défini une direction E d'empilement des couches des neurones 16.

Selon un exemple de réalisation des neurones 16, le passage s'effectue par l'utilisation d'un couple spin-orbite.

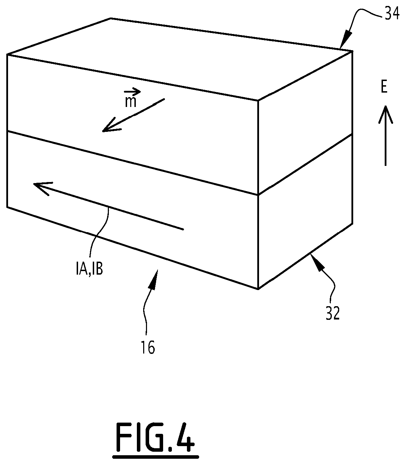

Un tel commutateur est représenté sur les figures 3 et 4.

Chaque neurone 16 comprend deux couches : une première couche 32 et une deuxième couche 34 superposées le long de la direction d'empilement E.

Selon l'exemple décrit, la première couche 32 a la forme d'une croix comprenant une première barre 32A de réception des courants d'entrée IA, IB et une deuxième barre 32B de mesure de tension.

Chaque barre 32A et 32B présente deux extrémités formant des bornes pour chacune des barres 32A et 32B.

La deuxième couche 34 présente la forme d'un cylindre. Par exemple, la base du cylindre est circulaire.

Par ailleurs, la deuxième couche 34 est superposée sur une partie de la première couche 32.

Dans le cas d'espèce, la deuxième couche 34 est uniquement située sur une partie centrale de la croix formant la première couche 32 selon la direction d'empilement E. La partie centrale correspond à la partie d'intersection des deux barres 32A, 32B formant la croix. En particulier, la partie centrale correspond à la partie de la croix où les centres des deux barres 32A, 32B sont confondus.

La première couche 32 est réalisée en un premier matériau tandis que la deuxième couche 34 est en un deuxième matériau.

A titre d'illustration, le premier matériau est un métal lourd et le deuxième matériau est un matériau ferromagnétique, l'inverse étant également envisageable.

Les métaux lourds sont généralement définis comme des éléments métalliques naturels dont la masse volumique est supérieure à 5 g/cm³.

Par exemple, le métal lourd est du tantale (Ta) ou du platine (Pt).

Le ferromagnétisme désigne la capacité de certains corps de s'aimanter sous l'effet d'un champ magnétique extérieur et de garder une partie de cette aimantation.

Par exemple, le matériau ferromagnétique est un alliage de cobalt-fer-bore (CoFeB) ou du cobalt (Co).

Par exemple, la première couche 32 est en tantale et la deuxième couche 34 est en un alliage de cobalt-fer-bore (CoFeB).

Selon un autre exemple de réalisation, la première couche est en platine (Pt) et la deuxième couche en cobalt (Co).

Chaque barre 32A, 32B est réalisée en un métal lourd.

Dans cet exemple, les premières barres 32A de chaque neurone 16 sont électriquement connectées en série.

Les courants d'entrée IA, IB sont propres à être appliqués à la première barre 32A selon une direction perpendiculaire à la direction d'empilement E, autrement dit, dans le plan de la première couche 32.

Dans ce cas, le passage d'une configuration d'aimantation à une autre configuration d'aimantation du neurone 16 est induite par couplage spin-orbite. Plus précisément, le couplage spin-orbite induit un effet Hall de spin dans la première couche 32 de métal lourd qui est propre à entraîner un changement d'aimantation de la deuxième couche 34.

Ainsi, l'effet Hall de spin donne lieu à un couple, appelé couple spin-orbite. Le couple spin-orbite est propre à faire passer l'aimantation de la deuxième couche 34 d'une configuration d'aimantation a une autre configuration d'aimantation.

Le changement de configuration d'aimantation du neurone 16 peut être détecté par l'effet de Hall anormal en mesurant la tension aux bornes de la deuxième barre 32B au moyen de l'unité de détection 52. Les bornes de la première barre 32A forment alors les bornes du neurone 16.

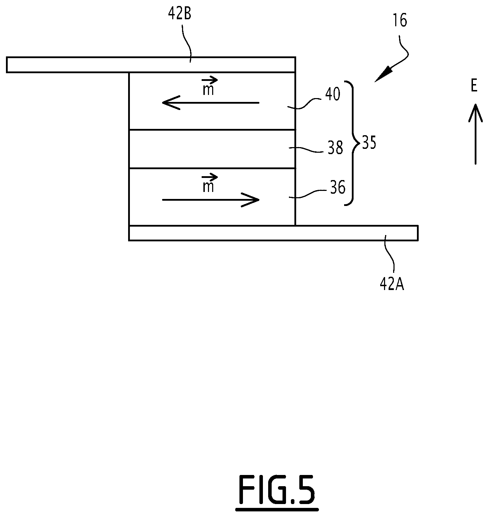

Selon une première variante représentée sur la figure 5, le passage d'une configuration d'aimantation à une autre configuration d'aimantation s'effectue à l'aide d'un couple de transfert de spin. Le terme commutateur à transfert de spin est alors utilisé pour désigner un tel neurone 16.

Les commutateurs à couple de transfert de spin sont des nano-dispositifs magnétiques comprenant notamment une couche magnétique.

Le neurone 16 comprend au moins deux couches de matériaux au moins partiellement superposées le long de la direction d'empilement E.

A titre d'exemple particulier, chaque neurone 16 est une jonction tunnel magnétique 35.

La jonction tunnel magnétique 35 comprend, selon la direction d'empilement E, trois couches : une première couche 36, une deuxième couche 38 et une troisième couches 40.

La première couche 36, la deuxième couche 38 et la troisième couche 40 sont chacune cylindrique et de mêmes dimensions.

La deuxième couche 38 recouvre totalement la première couche 36 et la troisième couche 40 recouvre totalement la deuxième couche 38.

L'ensemble formé par la première, deuxième et troisième couche 36, 38, 40 a la forme d'un cylindre. Par exemple, chaque cylindre présente une base circulaire.

En outre, la première couche 36 est empilée sur la première électrode 42A selon la direction d'empilement E. La première couche 36 recouvre une partie de la première électrode 42A.

La deuxième électrode 42B est empilée sur la troisième couche 40 selon la direction d'empilement E. La deuxième électrode 42B recouvre partiellement la troisième couche 40.

Autrement dit, la jonction tunnel magnétique est prise en sandwich entre les deux électrodes 42A, 42B.

La première et la troisième couches 36, 40 sont réalisées en un matériau magnétique et de préférence dans le même matériau magnétique.

Le matériau magnétique est un matériau ferromagnétique tel qu'un alliage fer-cobalt (FeCo), un alliage de Fer-Cobalt-Nickel (FeCoNi) ou un alliage de Nickel-Fe (Ni-Fe).

La deuxième couche 38 est réalisée en un isolant.

Par exemple, l'isolant 38 est réalisé en un oxyde de magnésium (MgO).

En outre, la deuxième couche 38 présente une épaisseur inférieure aux épaisseurs des première et troisième couches 36, 40. Il est entendu par « épaisseur de couche » la dimension d'une couche mesurée selon la direction d'empilement E.

L'aimantation de l'une des couches parmi la première et la troisième couches magnétiques est propre à commuter, c'est-à-dire qu'elle passe d'une configuration d'aimantation à une autre configuration d'aimantation, lorsque le courant d'entrée IA, IB appliqué au neurone 16 est strictement supérieur au courant critique de ce neurone 16.

Le passage d'une configuration d'aimantation à une autre se traduit en une variation de la résistance aux bornes du neurone 16.

Dans le cas de l'exemple représenté sur la figure 5, la troisième couche 40 est propre à passer d'une configuration d'aimantation à une autre.

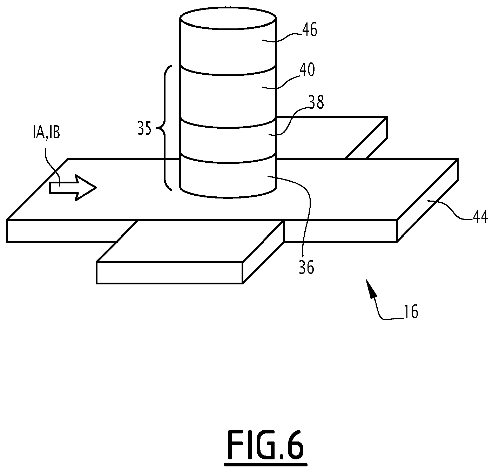

Selon une autre variante représentée sur la figure 6, le neurone 16 comprend une première couche de métal lourd 44 et une deuxième couche qui est une jonction tunnel magnétique 35, superposées selon la direction d'empilement E.

La couche de métal lourd 44 est une croix de Hall. Par exemple, le métal lourd est du tantale (Ta).

La jonction tunnel magnétique 35 est analogue à la jonction tunnel magnétique 35 décrite précédemment en référence à la figure 5. Alors, la jonction tunnel magnétique comprend les première, deuxième et troisièmes couches 36, 38, 40 décrites en référence à la figure 5.

Par exemple, le neurone 16 comprend, en outre, une troisième couche, appelée couche de recouvrement 46. La couche de recouvrement 46 est superposée sur la jonction tunnel magnétique 35 selon la direction d'empilement E. La couche de recouvrement 46 recouvre la troisième couche 40 de la jonction tunnel magnétique 35.

Par exemple, la couche de recouvrement 46 est réalisée en tantale (Ta) ou en ruthénium (Ru).

Le neurone 16 décrit dans la présente variante a un fonctionnement analogue au neurone 16 décrit en référence aux figures 3 et 4 lorsque les courants d'entrée IA, IB sont appliqués dans le plan de la couche de métal lourd 44 (comme montré par la flèche sur la figure 6).

Le neurone 16 décrit dans la présente variante présente un fonctionnement analogue au neurone 16 décrit en référence à la figure 5 lorsque les courants d'entrée IA, IB sont appliqués dans un plan perpendiculaire au plan de la couche de métal lourd 44 et des couches 36, 38, 40 de la jonction tunnel magnétique 35.

Ainsi, il est possible d'alimenter ce type de neurone 16 de différentes manières.

En l'espèce, l'aimantation de chaque neurone 16 décrit précédemment est propre à passer d'une configuration d'aimantation à une autre configuration d'aimantation en fonction du courant d'entrée IA, IB appliqué à ce neurone 16.

Pour chaque neurone 16, le passage d'une configuration d'aimantation à une autre configuration d'aimantation a lieu lorsque qu'un courant d'entrée IA, IB est appliqué à ce neurone 16. En l'espèce, le passage a lieu lorsque que le courant d'entrée IA, IB appliqué à ce neurone appartient à l'au moins une plage de courants prédéfinis d'une catégorie C prédéfinie associée à ce neurone 16.

Chaque courant d'entrée IA, IB d'une catégorie C prédéfinie est supérieur au courant critique du neurone 16 associé à ce courant d'entrée IA, IB.

Le circuit de sortie 18 est électriquement connecté au dispositif de classification 14.

Le circuit de sortie 18 comprend une mémoire 48 et un circuit de détection et d'association 50.

La mémoire 48 est propre à mémoriser la liste de catégories C prédéfinies.

Le circuit de détection et d'association 50 comprend une unité de détection 52 et une unité d'association 54.

Le circuit de détection et d'association 50 est propre à détecter au moins un changement de configuration d'aimantation d'un neurone 16ⱼ de l'ensemble de neurones 16 et à associer ledit neurone 16ⱼ présentant un changement de configuration d'aimantation à une catégorie C prédéfinie sur la base de la liste de catégories C prédéfinies.

L'unité de détection 52 comprend, par exemple, un circuit CMOS.

L'unité de détection 52 est propre à détecter un changement de configuration d'aimantation d'au moins un neurone 16ⱼ de la chaîne 30.

L'unité de détection 52 utilise, par exemple, la détection STT-MRAM. Cette détection STT-MRAM est usuellement réalisée en utilisant un transistor par neurone 16.

En particulier, l'unité de détection 52 est configurée pour détecter une variation de la tension mesurée aux bornes des neurones 16 (symbolisée par le symbole V entre les bornes du neurone 16 visible à la figure 3).

L'unité d'association 54 est propre à associer l'au moins un neurone 16ⱼ présentant un changement de configuration d'aimantation à une catégorie C prédéfinie sur la base de la liste de catégories C prédéfinies.

Le circuit d'ajustement 20 est électriquement connecté au dispositif de classification 14.

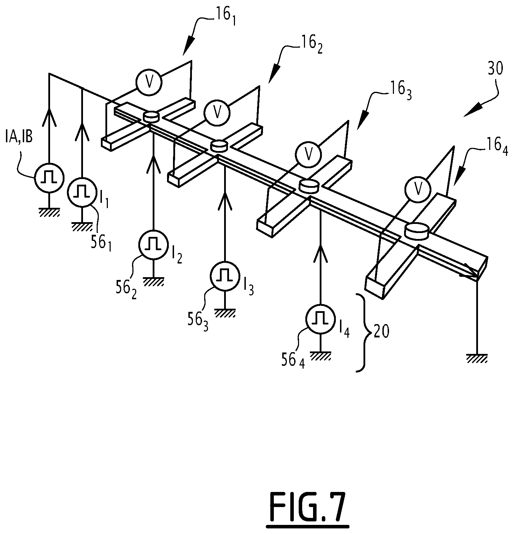

En référence à la figure 7, le circuit d'ajustement 20 comprend une pluralité de sources 56 de courant propres à délivrer chacune un courant d'ajustement.

Par exemple, le circuit d'ajustement 20 comprend autant de sources 56 de courant que de neurones 16. Chaque source 56 de courant est alors identifiée par l'indice j et notée 56ⱼ et est propre à délivrer un courant d'ajustement, noté Iⱼ.

Chaque source 56ⱼ est électriquement connectée à l'entrée d'un neurone 16ⱼ.

La première source 56₁ est connectée à l'entrée du premier neurone 16₁. La deuxième source 56₂ est connectée à l'entrée du deuxième neurone 16₂. La troisième source 56₃ est connectée à l'entrée du troisième neurone 16₃. La quatrième source 56₄ est connectée à l'entrée du quatrième neurone 16₄.

Par exemple, chaque courant d'ajustement Iⱼ est une impulsion de courant.

En variante du circuit d'ajustement 20 décrit précédemment, le circuit d'ajustement 20 comprend deux barres d'alimentation (non représentées sur les figures), l'une des barres connectant les différentes sources 56 de courants d'ajustement aux neurones 16 de la chaîne 30 et l'autre barre alimentant la chaîne 30 de neurones en courants d'entrée IA, IB.

Le circuit de synchronisation 22 est électriquement connecté entre le circuit d'entrée 12 et le circuit d'ajustement 20 pour synchroniser l'injection des courants d'entrée IA, IB et des courants d'ajustement dans les neurones 16 de la chaîne 30.

L'ensemble de classification 10 est adapté pour mettre en oeuvre un procédé 100 de classification de signaux S.

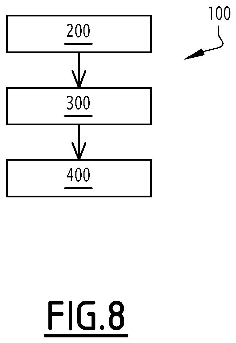

En référence à la figure 8, le procédé 100 de classification de signaux dans des catégories prédéfinies mis en oeuvre par l'ensemble 10 de classification est décrit dans la suite de la présente description.

Le procédé 100 est propre à classer chaque signal S à classer dans une catégorie C prédéfinie correspondant à ce signal S de la liste de catégories C prédéfinie.

Selon l'exemple décrit, le procédé de classification 100 comprend trois phases : une phase initiale 200, une phase d'exploitation 300 et une phase 400 d'apprentissage.

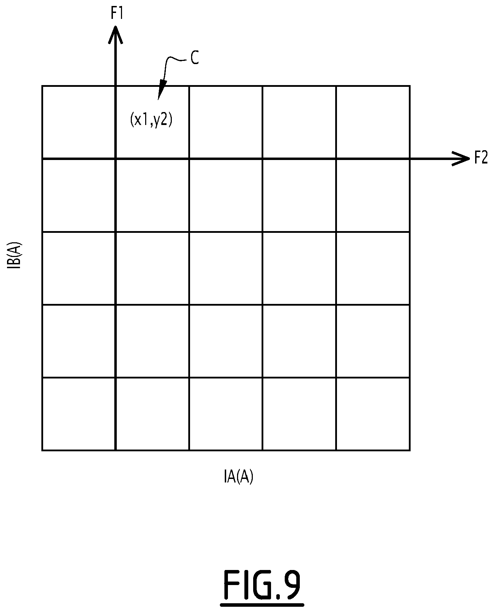

Au cours de la phase initiale 200, la liste de catégories C prédéfinies est fournie sous la forme de la cartographie montrée à la figure 9.

La cartographie comprend (N1+1)² états de commutation possibles.

En l'espèce, la cartographie comprend 25 configurations.

En outre, dans cet exemple particulier, deux plages de courants sont associées à chaque catégorie C prédéfinie. Ainsi, chaque catégorie C est délimitée par des frontières correspondant aux seuils des plages de courant définies pour cette catégorie C. Chaque plage de courant correspond à un courant d'entrée IA, IB respectif.

En outre, comme visible sur cette figure 9, pour chaque catégorie C prédéfinie, il est défini un état de commutation, noté (x1, y2).

Une première coordonnée de l'état, notée x1, identifie le ou les neurone(s) 16ⱼ changeant de configuration d'aimantation sous l'effet du courant IA. Autrement dit, la première coordonnée x1 identifie le ou les neurones 16 pour lesquels le courant d'entrée IA, délimité par la première flèche F1, est strictement supérieur au courant critique de ce ou ces neurones 16.

Une deuxième coordonnée de l'état, notée y2, identifie-le ou les neurone(s) 16 changeant de configuration d'aimantation sous l'effet du courant d'entrée IB. Autrement dit, la deuxième coordonnée y2 identifie les neurones 16 pour lesquels le courant IB, identifié par la flèche F2, est strictement supérieur au courant critique de ce ou ces neurones 16.

Il est possible que l'un des états de commutation (x1, y2) ne corresponde à aucun changement de configuration d'aimantation d'au moins un neurone 16. Autrement dit, la catégorie C présentant cet état de commutation n'est associée à aucun neurone 16.

En outre, au cours de la phase initiale 200, la liste de catégories C prédéfinies mémorisée sous la forme de la cartographie montrée à la figure 9 est fournie et mémorisée par la mémoire 48.

Par exemple, la mémoire 48 mémorise pour chaque catégorie C prédéfinie, les états de commutation (x1, y2) sous la forme de vecteurs binaires.

En outre, au cours de la phase initiale 200, pour chaque neurone 16ⱼ, une ou plusieurs caractéristique(s) du neurone 16ⱼ sont déterminées sur la base de la liste de catégories C prédéfinies fournie. Les caractéristiques déterminées sont le diamètre et/ou l'épaisseur des couches formant les neurones 16.

Le réglage des caractéristiques des neurones 16 permet d'ajuster le courant critique de chacun des neurones 16.

En l'espèce, l'étape initiale 200 permet de régler le passage d'aimantation des neurones 16 d'une configuration d'aimantation à une autre configuration conformément à la liste de catégories C prédéfinies.

Autrement dit, l'étape initiale 200 permet, pour chaque catégorie C, de régler le changement de configuration d'aimantation des neurones 16 associés à cette catégorie C lorsque chaque neurone 16 de cette catégorie C est alimenté par un courant d'entrée IA, IB respectif faisant partie de la plage de courants d'entrée associée à cette catégorie C.

La phase d'exploitation 300 du procédé de classification 100 est décrite dans la suite.

Uniquement à des fins d'illustration, il est supposé qu'on souhaite classer un seul signal S1. Le signal S1 correspond à une voyelle parlée mais n'est pas identifié.

Lors d'une première étape, plusieurs émissions du signal S1 à classer sont fournies au circuit d'entrée 12. Les différentes émissions forment les entrées de l'ensemble de classification 10.

Par exemple, chaque émission du signal S1 correspond à un son émis par une personne différente correspondant au signal S1.

Chaque émission du signal S1 est encodée par l'unité d'encodage 26 dans les deux courants d'entrées IA, IB.

En outre, l'unité d'encodage 26 module chaque courant d'entrée IA, IB, par exemple, par une hauteur d'amplitude d'impulsion.

Chaque courant d'entrée IA, IB encode l'information d'une émission du signal S1. Chaque émission du signal S1 présente deux fréquences caractéristiques, notées F1 et F2.

Les amplitudes de courants IA et IB s'écrivent alors sous la forme suivante :
- IA = A1.F1
- IB = A2.F2

Où :
- F1 et F2 sont les fréquences caractéristiques de chaque émission du signal S1 aussi appelées par le terme connu « formants », et
- A1 et A2 sont des coefficients d'ajustement permettant d'obtenir deux valeurs caractéristiques des amplitudes des courants d'entrée IA, IB.

En variante, l'unité d'encodage 26 module chaque courant d'entrée IA, IB, par exemple, par une largeur d'impulsion de courant plutôt que par l'amplitude de l'impulsion.

Encore en variante, les entrées de l'ensemble 10 de classification sont uniquement les formants F1, F2 du signal S1.

Lors d'une deuxième étape, l'unité d'injection 28 injecte successivement les courants d'entrée IA, IB à l'entrée 14E du dispositif de classification 14 pour alimenter successivement l'unique chaîne 30 avec les courants d'entrée IA, IB.

Par exemple, avant l'injection des courants d'entrée IA, IB, une initialisation du dispositif de classification 14 est réalisée.

En outre, entre l'injection d'un courant d'entrée IA et l'injection d'un autre courant d'entrée IB dans la chaîne 30 une initialisation du dispositif de classification 14 est aussi réalisée.

En l'espèce, l'initialisation est réalisée par l'application d'un courant de saturation présentant une polarité négative dans la chaîne 30.

Le courant de saturation a pour effet de réinitialiser l'état d'aimantation des neurones 16 de la chaîne 30.

Pour chaque neurone 16, le passage d'une configuration d'aimantation à une autre configuration d'aimantation a lieu lorsqu'un courant d'entrée IA, IB appartenant à l'au moins une plage de courants prédéfinis d'une catégorie C prédéfinie associée à ce neurone 16 est appliqué audit neurone 16.

Lors d'une troisième étape, l'unité de détection 52 est propre à détecter un changement de la configuration d'aimantation d'au moins un neurone 16 de la chaîne 30.

Par exemple, le changement de configuration d'aimantation correspond à un changement de la résistance aux bornes du neurone 16 en fonction du courant d'entrée IA, IB appliqué au neurone 16. Par exemple, la résistance du neurone 16 varie sous la forme d'une boucle de résistance en fonction du courant appliqué au neurone 16. En outre, la boucle de résistance définit deux paliers de résistance distincts en fonction du courant appliqué au neurone 16. Ainsi, le passage d'une configuration d'aimantation à une autre se produit lorsque la résistance du neurone 16 change de palier sous l'effet du courant d'entrée IA, IB appliqué à ce neurone 16.

En effet, lors du passage du neurone 16ⱼ d'une configuration d'aimantation à une autre, la résistance de la jonction tunnel magnétique change de manière brutale du fait de l'effet de magnétorésistance tunnel.

Alors, l'unité de détection 52 détecte, par exemple, la variation de tension mesurées aux bornes des neurones 16ⱼ de la chaîne 30, en réponse aux courants d'entrée IA, IB appliqués à cette chaîne 30 pour en déduire une variation de la résistance du neurone 16.

Par exemple, lors de chaque émission du signal S1, l'unité de détection 52 délivre un état de commutation détectée, notée (xA, yB). Une première coordonnée de la configuration, notée xA, identifie le ou les neurone(s) 16ⱼ ayant changé de configuration d'aimantation sous l'effet du courant d'entrée IA et une deuxième coordonnée de la configuration, notée yB, identifie le ou les neurone(s) 16ⱼ ayant changé de configuration d'aimantation sous l'effet de l'autre courant d'entrée IB.

De préférence, l'état de commutation détectée (xA, yB) comprend des vecteurs binaires et est de forme analogue à l'état de commutation mémorisée (x1, y2) dans la mémoire 48 afin que l'état de commutation mémorisée (x1, y2) et l'état de commutation détectée (xA, yB) délivrés par l'unité de détection 52 puissent être comparés entre eux par l'unité d'association 54.

Dans le cas d'espèce, lors de l'injection du courant d'entrée IA, l'unité de détection 52 détecte le passage d'une configuration d'aimantation à une autre de l'aimantation des neurones 16₁ et 16₂. En outre, lors de l'injection de l'autre courant d'entrée IB, l'unité de détection 52 détecte un changement de la configuration d'aimantation de l'aimantation du neurone 16₁.

L'unité de détection 52 délivre alors pour chaque émission du signal S1, un état de commutation détecté (xA, yB) représentatif du passage d'une configuration d'aimantation à une autre de l'aimantation des neurones 16₁,16₂ d'une part et 16₁ d'autre part.

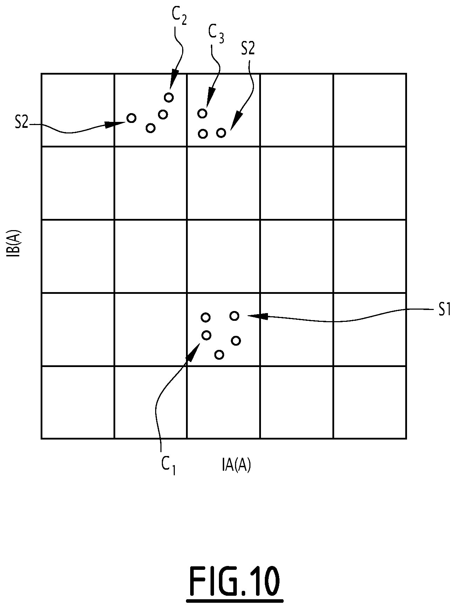

L'unité d'association 54 associe, par comparaison, l'état de commutation détecté (xA, yB) à la catégorie C₁ de la liste de catégories prédéfinies, visible sur la figure 10. Chaque point visible dans la catégorie C₁ correspond à une émission du signal S1 en fonction des courants d'entrée IA, IB. Ainsi, toutes les émissions du signal S1 sont classées dans la seule et même catégorie C₁.

La catégorie C₁ correspond au son « ah ».

Le signal S1 a donc été identifié et correspond à la voyelle parlée « ah ».

La sortie du circuit de sortie 18 est une fonction non linéaire des signaux S à classer appliqués en entrée du dispositif de classification 14.

Dans le cas de l'alimentation de l'ensemble de classification 10 en nouveaux signaux à classer non prévus lors de la fabrication de l'ensemble de classification 10, il est parfois souhaitable d'apprendre à l'ensemble de classification 10 à classer ces nouveaux signaux.

Un exemple de phase d'apprentissage 400 est décrite dans la suite de la description.

La phase d'apprentissage 400 est une phase optionnelle du procédé 100 de classification.

La phase d'apprentissage 400 entraîne l'ensemble 10 de classification avec un jeu de signaux connus.

Pour expliquer la phase d'apprentissage 400, il est considéré le deuxième signal à classer S2. Le deuxième signal S2 est un signal connu et utilisé pour l'entraînement de l'ensemble 10 de classification.

Le deuxième signal S2 correspond également à une voyelle parlée. Par exemple, la voyelle parlée correspond à la voyelle « eh ».

En variante, le deuxième signal S2 est un tout autre type de signal qu'une voyelle parlée, par exemple une consonne parlée.

Selon une autre variante, le deuxième signal S2 est un signal lumineux ou une image.

Il est aussi supposé que des courants d'entrée IA, IB encodant le deuxième signal S2 ont été fournis à l'ensemble 10 de classification lors de la phase d'exploitation 200 décrite ci-dessus.

Pour les différentes émissions du deuxième signal S2, lors de la phase d'exploitation 200, l'unité de détection 52 délivre deux états de commutation (xA, yB) distincts : un premier état de commutation et un deuxième état de commutation.

Le circuit d'association 54 a associé le premier état de commutation détecté à la deuxième catégorie C₂ et le deuxième état de commutation détecté à la troisième catégorie C₃.

En effet, comme visible sur la figure 10 les points correspondant aux différentes émissions du deuxième signal S2 en fonction des courants IA et IB sont répartis dans les deuxième et troisième catégories C₂ et C₃.

Or, la deuxième catégorie C₂ correspond à la voyelle parlée « oh » mais la troisième catégorie C₃ correspond bien à la voyelle parlée « eh ». Ainsi, certaines émissions du deuxième signal S2 sont classées de manière erronée dans la deuxième catégorie prédéfinie C₂.

Pour effectuer l'apprentissage, les courants d'entrées IA, IB encodant le deuxième signal S2 sont de nouveau injectés par le circuit d'entrée 12 dans le dispositif de classification 14.

La phase d'apprentissage 400 comprend, en outre, une étape pour contrôler le passage d'une configuration d'aimantation à une autre configuration d'aimantation de certains neurones 16, pour que toutes les émissions du deuxième signal S2 à classer présentent un état de commutation identique et appartiennent à une unique catégorie C.

Il en résulte que le circuit d'ajustement 20 injecte des courants d'ajustement Iⱼ dans un ou plusieurs neurones 16 de la chaîne 30.

Les courants d'ajustement Iⱼ contrôlent la valeur du courant alimentant chaque neurone 16ⱼ de l'ensemble de neurones 16.

Autrement dit, les courants d'ajustement Iⱼ contrôlent la valeur du courant effectif alimentant chaque neurone 16. Le courant effectif est égal à la somme du courant d'entrée IA, IB appliqué à ce neurone 16 et du courant d'ajustement Iⱼ circulant dans le neurone 16 considéré.

Pour expliquer le principe de l'apprentissage, il est considéré un exemple dans lequel la deuxième catégorie C2 (correspondant au signal « oh ») identifie le neurone 16₁ et la troisième catégorie C3 (correspondant au signal « eh ») identifie les neurones 16₁ et 16₂ lorsque le courant d'entrée IA est appliqué à la chaîne 30 de neurones 16.

Ainsi, pour chaque courant d'entrée IA, l'aimantation des deux neurones 16₁ et 16₂ doit changer de configuration et pas seulement l'aimantation du seul neurone 16₁.Mais, avant l'apprentissage le courant critique du deuxième neurone 16₂ est supérieur au courant critique du neurone 16₁. De ce fait, pour certaines émissions du deuxième signal S2, le courant d'entrée IA est inférieur au courant critique du neurone 16₂. Il en résulte que le deuxième neurone 16₂ ne change pas de configuration d'aimantation sous l'effet du courant d'entrée IA alors qu'il est souhaité que le changement ait lieu.

Alors, pour effectuer l'apprentissage de l'ensemble 10 de classification, un courant d'ajustement I₂ est appliqué au deuxième neurone 16₂. Le courant d'ajustement I₂ augmente la valeur du courant alimentant le deuxième neurone 16₂. Il en résulte que le courant effectif alimentant le deuxième neurone 16₂ est supérieur au courant critique de ce neurone 16₂. Ceci entraîne un changement de configuration du deuxième neurone 16₂.

Il en résulte que les courants d'ajustement Iⱼ modifient les courants critiques effectifs d'un ou plusieurs neurones 16 de la chaîne 30 pour contrôler le changement de configuration d'aimantation de ce ou ces neurone(s) 16. En d'autres termes, les courants d'ajustement Iⱼ permettent de réaliser un apprentissage.

L'étape d'apprentissage 400 revient à modifier les seuils des plages de courants IA, IB de chaque catégorie C prédéfinie.

Les courants d'ajustement Iⱼ ont la même polarité.

En variante, certains courants d'ajustement Iⱼ ont des polarités opposées.

Avantageusement, l'étape pour contrôler le passage d'une configuration d'aimantation à une autre est réalisée simultanément à la troisième étape de la phase d'exploitation 300. L'injection simultanée des courants d'entrées IA, IB et des courants d'ajustement Iⱼ est contrôlée par le circuit de synchronisation 22.

Il est entendu par « injection simultanée » que l'injection des courants d'ajustement Iⱼ peut débuter avant l'injection des courants d'entrée IA, IB, et se poursuivre pendant toute la durée de l'injection des courants d'entrée IA, IB. Par exemple, l'injection des courants d'ajustement débute à un premier instant, noté T1, avant l'injection des courants d'entrée IA, IB. La première période de temps entre la première période de temps T1 et le début de l'injection des courants d'entrée IA, IB est, par exemple, comprise entre 10% et 20% de la largeur d'impulsion des courants d'entrée IA, IB. Il est également entendu par « injection simultanée » que l'injection des courants d'ajustement Iⱼ est réalisée en même temps que l'injection des courants d'entrée IA, IB et peut se poursuivre après l'injection des courants d'entrées IA, IB. Par exemple, l'injection des courants d'ajustement Iⱼ se termine à un deuxième instant, notée T2, après une deuxième période de temps après l'injection des courants d'entrée IA, IB. La deuxième période de temps est, par exemple, comprise entre 10% et 20% de la largeur d'impulsion des courants d'entrée IA, IB.

Le circuit d'ajustement 20 permet de modifier les frontières de chaque catégorie prédéfinie C de manière indépendante. Ainsi, la cartographie de catégories C prédéfinies peut être adaptée aux différents signaux à classer.

L'ensemble de classification 10 présente des caractéristiques améliorées par rapport aux classificateur de l'état de la technique.

Tout d'abord, l'ensemble de classification 10 est compact. En effet, les neurones 16 présentent des dimensions très réduites. En effet, chaque neurone 16 présente une dimension égale à environ 100 nanomètres.

Le dispositif de classification 10 peut donc être mis en oeuvre sur une puce CMOS très compacte. A titre d'illustration, une puce de 0,05 mm² permettrait d'inclure 10⁶ neurones et un transistor par neurone 16 pour la détection des changements de configuration d'aimantation.

Les neurones 16 sont particulièrement peu coûteux en énergie. Il n'est pas nécessaire de les alimenter en permanence. En effet, il suffit d'appliquer au neurones 16 des impulsions de courants pour obtenir le passage d'une configuration d'aimantation à une autre.

En outre, le passage d'une configuration d'aimantation à une autre de l'aimantation des neurones 16 peut être obtenu avec des courants d'entrée IA, IB présentant une faible largeur d'impulsion, telle qu'une largeur d'impulsion comprise entre 1 nanoseconde (ns) et 10 ns.

Ainsi, la consommation d'énergie du circuit d'entrée 12, c'est-à-dire nécessaire pour appliquer les courants d'entrée IA, IB au dispositif de classification 14 peut être inférieure à 1 picoJoule (pJ).

En outre, les courants d'ajustement Iⱼ sont propres à présenter une faible amplitude. En particulier, le circuit d'ajustement 20 présente une consommation aussi faible que 7 pJ pour l'application d'une impulsion de 300 ns d'un courant d'ajustement Iⱼ avec une amplitude d'une dizaine de micro ampères, incluant la dissipation du circuit 20.

En outre, les impulsions des courants d'ajustement Iⱼ présentent une amplitude très inférieure à celle des impulsions des courants d'entrée IA, IB, c'est-à-dire une amplitude égale à environ 10% de l'amplitude des impulsions des courants d'entrée IA, IB.

Par ailleurs, la liste de catégories C prédéfinies est très adaptable. En effet, grâce à l'invention, chaque catégorie C peut présenter une forme et une taille différente des autres catégories. Cela est notamment obtenu grâce à la nature des neurones 16. En effet, la forme et les dimensions de chaque catégorie C prédéfinie peuvent être adaptées notamment en faisant varier le diamètre et/ou les épaisseurs des couches formant les neurones 16.

En outre, la forme et les dimensions de chaque catégorie C prédéfinie peuvent être adaptées de manière externe à la chaîne 30 de neurone par le circuit d'ajustement 20.

Le fait de pouvoir agir sur les paramètres de chaque catégorie C prédéfinie de manière externe ne peut être obtenu avec les oscillateurs puisque les dimensions de chaque catégorie sont données par la plage de verrouillage, aussi appelée « plage de synchronisation » et dépendent donc de paramètres intrinsèques aux oscillateurs. La plage de verrouillage définit la plage de fréquences de l'oscillateur pour que l'oscillateur se synchronise au signal microonde auquel l'oscillateur est soumis.

En outre, dans la cartographie de catégories C prédéfinies, l'abscisse et l'ordonnée de chaque catégorie C peuvent être modifiées indépendamment l'une de l'autre. Cela est dû au fait que les courants d'ajustement Iⱼ injectés simultanément au courant d'entrée IA peuvent être différent des courants d'ajustement Iⱼ injectés simultanément à l'autre courant d'entrée IB. Ainsi, pour un même neurone 16ⱼ, il est possible d'ajuster indépendamment la plage de courant d'entrée IA, IB propre à le faire passer d'une configuration d'aimantation à une autre selon qu'il s'agisse du courant d'entrée IA ou de l'autre courant d'entrée IB. Cela n'est pas possible en utilisant des oscillateurs.

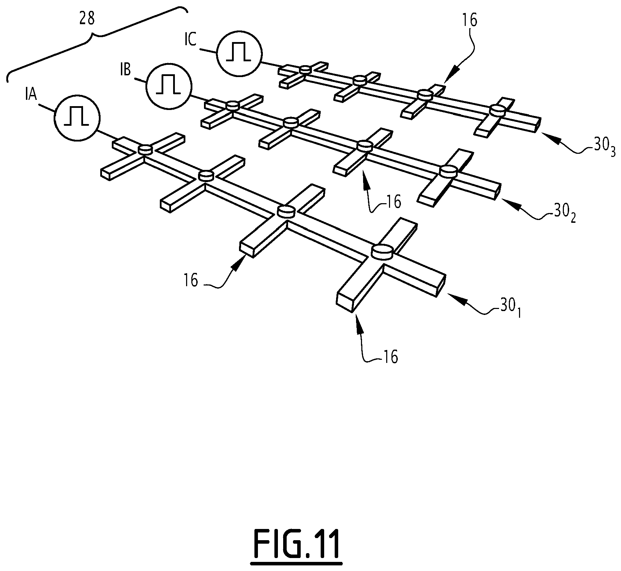

Un autre mode de réalisation de l'ensemble de classification 10 est décrit en référence à la figure 11. Ce mode de réalisation est décrit uniquement par différence au mode de réalisation décrit en relation aux figures 1 à 7.

L'ensemble de classification du présent mode de réalisation ne diffère de l'ensemble de classification des figures 1 à 7 qu'en ce qu'il comporte une pluralité de chaînes 30 de neurones 16.

Par exemple, l'ensemble 10 comprend un nombre N2 de chaînes de neurones. Chaque chaîne est alimentée est un courant d'entrée distinct.

Dans l'exemple particulier illustré sur la figure 12, N2 est égal à 3. Ainsi chaque chaîne 30₁, 30₂, 30₃ est destinée à être alimentée par un courant d'entrée IA, IB, IC respectif.

Dans ce cas, le procédé de classification 100 diffère du procédé 100 décrit précédemment uniquement en ce que, lors de la phase d'exploitation 300, un courant d'entrée respectif IA, IB, IC est appliqué à chaque chaîne 30. Les courants d'entrée respectifs sont appliqués simultanément dans chacune des chaînes 30.

Il en résulte que l'étape d'initialisation entre deux injections de courant d'entrée est supprimée par rapport au mode de réalisation des figures 1 à 7. Le temps de calcul du procédé de classification 100 s'en trouve alors encore réduit.

Dans tous les modes de réalisations, le dispositif de classification 14 et l'ensemble de classification 10 présentent un encombrement réduit tout en comprenant un nombre élevé de neurones et présentant une faible consommation électrique.

En outre, l'ensemble de classification 10 permet de classifier une variété importante de signaux.

De nouveaux modes de réalisation peuvent être obtenus par combinaison des modes de réalisation précédemment décrits lorsque ceux-ci sont techniquement compatibles.

## Revendications

1. Dispositif (14) de classification de signaux (S), chaque signal (S) étant destiné à être classé dans une catégorie (C) prédéfinie correspondant à ce signal (S), au moins une plage de courants prédéfinis étant associée à chaque catégorie (C) prédéfinie, le dispositif (14) comprenant :
- au moins une chaîne (30) de neurones comportant un ensemble de neurones (16), chaque neurone (16) ayant une aimantation propre à présenter une première configuration et une deuxième configuration, les neurones (16) d'une chaîne (30) étant connectés en série les uns aux autres, au moins un neurone (16) de l'au moins une chaîne (30) de neurones étant, en outre, associé à une catégorie (C) prédéfinie,
- une entrée (14E) propre à recevoir des courants d'entrée (IA, IB) représentatifs des signaux (S) à classer et destinés à alimenter l'au moins une chaîne (30) de neurones,
l'aimantation d'au moins un neurone (16) de l'au moins une chaîne (30) de neurones étant propre à passer d'une configuration à une autre configuration parmi la première configuration et la deuxième configuration en fonction d'un courant d'entrée (IA, IB) appliqué à l'au moins une chaîne (30) de neurones, le passage d'une configuration à une autre configuration pour l'au moins un neurone (16) ayant lieu lorsque qu'un courant d'entrée (IA, IB) appartenant à l'au moins une plage de courants prédéfinis d'une catégorie (C) prédéfinie associée à l'au moins un neurone (16) est appliqué audit neurone (16).

2. Dispositif (14) de classification selon la revendication 1, dans lequel chaque courant d'entrée (IA, IB) est une impulsion de courant.

3. Dispositif (14) de classification selon la revendication 1 ou 2, dans lequel chaque neurone (16) est un commutateur, chaque neurone (16) étant un commutateur choisi dans la liste suivante de commutateurs :
- un commutateur comprenant une jonction tunnel magnétique (35),
- un commutateur présentant un couple spin-orbite, chaque neurone (16) comprenant une première couche (32) en un premier matériau et une deuxième couche (34) en un deuxième matériau, le premier matériau étant en l'un des matériaux parmi un métal lourd et un matériau ferromagnétique et le deuxième matériau étant dans l'autre des matériaux parmi le métal lourd et le matériau ferromagnétique, la première couche (32) et la deuxième couche (34) étant superposées le long d'une direction d'empilement (E) des couches, et
- un commutateur comprenant une première couche (44) et au moins une deuxième couche (35), la première couche (44) étant en un métal lourd et l'au moins une deuxième couche étant formée par une jonction tunnel magnétique (35), la première couche (44) et la deuxième couche (35) étant empilées selon une direction d'empilement (E) des couches.

4. Dispositif (14) selon l'une quelconque des revendications 1 à 3, dans lequel au moins deux neurones (16) de la chaîne (30) présentent une caractéristique différente choisie parmi le diamètre et l'épaisseur.

5. Dispositif (14) de classification selon l'une quelconque des revendications 1 à 4, comprenant une unique chaîne (30) de neurones, l'entrée (14E) étant destinée à alimenter l'unique chaîne (30) de neurones par les courants d'entrée (IA, IB) représentatifs des signaux (S) à classer de manière successive.

6. Ensemble (10) de classification de signaux (S) propre à classer chaque signal (S) dans une catégorie (C) prédéfinie correspondant à ce signal, l'ensemble (10) comprenant :
- un dispositif (14) de classification selon l'une quelconque des revendications 1 à 5,
- un circuit d'entrée (12) électriquement connecté à l'entrée (14E) du dispositif (14) de classification, le circuit d'entrée (12) étant propre à encoder les signaux (S) à classer dans des courants d'entrée (IA, IB) et à injecter les courants d'entrée (IA, IB) dans le dispositif (14) de classification, et
- un circuit de sortie (18) électriquement connecté au dispositif (14) de classification, le circuit de sortie (18) comprenant une mémoire (48) et un circuit de détection et d'association (50),
la mémoire (48) étant propre à mémoriser une liste de catégories (C) prédéfinies, chaque catégorie (C) prédéfinie étant associée à au moins une plage de courants prédéfinis et au moins un neurone (16) de l'au moins une chaîne (30) de neurones étant associé à une catégorie (C) prédéfinie, et le circuit de détection et d'association (50) étant propre à détecter au moins un changement de configuration d'aimantation d'au moins un neurone (16) de l'ensemble de neurones et à associer l'au moins un neurone (16) présentant un changement de configuration d'aimantation à une catégorie (C) prédéfinie sur la base de la liste de catégories (C) prédéfinies.

7. Ensemble (10) de classification selon la revendication 6, dans lequel le circuit d'entrée (12) comprend une unité d'encodage (26) configurée pour encoder les signaux (S) à classer dans les courants d'entrée (IA, IB).

8. Ensemble (10) de classification selon la revendication 6 ou 7, comprenant, en outre, un circuit d'ajustement (20) de l'aimantation de chacun des neurones (16), le circuit d'ajustement (20) étant connecté électriquement à l'au moins une chaîne (30) de neurones, le circuit d'ajustement (20) étant propre à injecter des courants d'ajustement (Iⱼ) différents dans chaque neurone (16), les courants d'ajustement (Iⱼ) étant propres à contrôler la valeur du courant alimentant chaque neurone (16) de l'au moins une chaîne (30) et un circuit de synchronisation (22) connecté entre le circuit d'entrée (12) et le circuit d'ajustement (20) pour synchroniser l'injection des courants d'entrée (IA, IB) et des courants d'ajustement (Iⱼ) dans les neurones (16).

9. Procédé (100) de classification de signaux (S) dans des catégories (C) mis en œuvre par un ensemble (10) de classification selon l'une quelconque des revendications 6 à 8, chaque signal (S) à classer étant destiné à être classé dans une catégorie (C) prédéfinie correspondant à ce signal (S), le procédé comprenant une phase d'exploitation (300) de l'ensemble (10) de classification, la phase d'exploitation (300) comprenant les étapes suivantes:
- fournir au circuit d'entrée (12) au moins un signal (S) à classer,
- fournir au circuit de sortie (18) une liste de catégories (C) prédéfinies, chaque catégorie (C) prédéfinie étant associée à au moins une plage de courants prédéfinis et au moins un neurone (16) de la chaîne (30) de neurones étant associé à une catégorie (C) prédéfinie, le passage d'une configuration à une autre configuration pour l'au moins un neurone (16) ayant lieu lorsque qu'un courant d'entrée (IA, IB) appartenant à l'au moins une plage de courants prédéfinis d'une catégorie (C) prédéfinie associée à l'au moins un neurone (16) est appliqué audit neurone (16),
- convertir l'au moins un signal (S) à classer en au moins un courant d'entrée (IA, IB) avec le circuit d'entrée (12),
- injecter l'au moins un courant d'entrée (IA, IB) à l'entrée du dispositif (14) de classification avec le circuit d'entrée (12),
- détecter un changement de configuration d'aimantation d'au moins un neurone (16) de l'au moins une chaîne (30) de neurones avec le circuit de détection et d'association (50) suite à l'injection de l'au moins un courant d'entrée (IA, IB),
- associer l'au moins un neurone (16) présentant un changement de configuration d'aimantation à une catégorie (C) prédéfinie sur la base de la liste de catégories (C) prédéfinies avec le circuit de détection et d'association (50), et
- classer l'au moins un signal (S) à classer dans ladite catégorie (C) prédéfinie,
le procédé comprenant, de préférence, une phase initiale (200) au cours de laquelle une ou plusieurs caractéristique(s) des neurones (16) de l'au moins une chaîne (30) de neurones sont déterminées en fonction de la liste de catégories (C) prédéfinies.

10. Procédé selon la revendication 9, dans lequel lorsque l'au moins un signal (S) à classer est classé dans une catégorie (C) prédéfinie erronée, le procédé (100) comprend, en outre, une étape d'apprentissage (400) pour contrôler le changement de configuration d'aimantation d'au moins un neurone (16) de l'au moins une chaîne (30) de neurones en envoyant à nouveau le signal (S) à classer et en injectant avec le circuit d'ajustement (20) au moins un courant d'ajustement (Iⱼ) dans l'au moins un neurone (16) de l'au moins une chaîne (30) de neurones.

## Patentansprüche

1. Vorrichtung (14) zur Einordnung von Signalen (S), wobei jedes Signal (S) dazu bestimmt ist, in eine vordefinierte Kategorie (C) eingeordnet zu werden, die diesem Signal (S) entspricht, wobei mindestens ein Bereich von vordefinierten Strömen mit jeder vordefinierten Kategorie (C) assoziiert ist, die Vorrichtung (14) umfassend:
- mindestens eine Kette (30) von Neuronen, umfassend eine Neuronenanordnung (16), wobei jedes Neuron (16) eine Magnetisierung aufweist, die geeignet ist, um eine erste Konfiguration und eine zweite Konfiguration aufzuweisen, wobei die Neuronen (16) einer Kette (30) in Reihe miteinander verbunden sind, wobei mindestens ein Neuron (16) der mindestens einen Kette (30) von Neuronen ferner mit einer vordefinierten Kategorie (C) assoziiert ist,
- einen Eingang (14E), der geeignet ist, um Eingangsströme (IA, IB) zu empfangen, die repräsentativ für die einzuordnenden Signale (S) sind und dazu bestimmt sind, die mindestens eine Kette (30) von Neuronen zu versorgen,
wobei die Magnetisierung mindestens eines Neurons (16) der mindestens einen Kette (30) von Neuronen geeignet ist, abhängig von einem Eingangsstrom (IA, IB), der an die mindestens eine Kette (30) von Neuronen angelegt wird, von einer Konfiguration zu einer anderen Konfiguration der ersten Konfiguration und der zweiten Konfiguration zu wechseln, wobei der Übergang von einer Konfiguration zu einer anderen Konfiguration für das mindestens eine Neuron (16) erfolgt, wenn ein Eingabestrom (IA, IB), der zu dem mindestens einen Bereich von vordefinierten Strömen einer vordefinierten Kategorie (C) gehört, die mit dem mindestens einen Neuron (16) assoziiert ist, an das Neuron (16) angelegt wird.

2. Einordnungsvorrichtung (14) nach Anspruch 1, wobei jeder Eingangsstrom (IA, IB) ein Stromimpuls ist.

3. Einordnungsvorrichtung (14) nach Anspruch 1 oder 2, wobei jedes Neuron (16) ein Schalter ist, wobei jedes Neuron (16) ein Schalter ist, der ausgewählt ist aus der folgenden Liste von Schaltern:
- ein Schalter, umfassend einen magnetischen Tunnelübergang (35),
- ein Schalter, der ein Spin-Bahn-Paar aufweist, jedes Neuron (16) umfassend eine erste Schicht (32) aus einem ersten Material und eine zweite Schicht (34) aus einem zweiten Material, wobei das erste Material aus einem Schwermetall oder einem ferromagnetischen Material und das zweite Material aus dem anderen Material von dem Schwermetall oder dem ferromagnetischen Material besteht, wobei die erste Schicht (32) und die zweite Schicht (34) entlang einer Stapelrichtung (E) der Schichten übereinander angeordnet sind, und
- ein Schalter, umfassend eine erste Schicht (44) und mindestens eine zweite Schicht (35), wobei die erste Schicht (44) aus einem Schwermetall besteht und die mindestens eine zweite Schicht durch einen magnetischen Tunnelübergang (35) gebildet ist, wobei die erste Schicht (44) und die zweite Schicht (35) entlang einer Stapelrichtung (E) der Schichten gestapelt sind.

4. Vorrichtung (14) nach einem der Ansprüche 1 bis 3, wobei mindestens zwei Neuronen (16) der Kette (30) ein unterschiedliches Merkmal aufweisen, das ausgewählt ist aus Durchmesser und Stärke.

5. Vorrichtung (14) zur Einordnung nach einem der Ansprüche 1 bis 4, umfassend eine einzige Kette (30) von Neuronen, wobei der Eingang (14E) dazu bestimmt ist, die einzige Kette (30) von Neuronen mit den Eingangsströmen (IA, IB) zu versorgen, die repräsentativ für die nacheinander einzuordnenden Signale (S) sind.

6. Anordnung (10) zur Einordnung von Signalen (S), die geeignet ist, um jedes Signal (S) in eine vordefinierte Kategorie (C) einzuordnen, die diesem Signal entspricht, die Anordnung (10) umfassend:
- eine Vorrichtung (14) zur Einordnung nach einem der Ansprüche 1 bis 5,
- eine Eingangsschaltung (12), die elektrisch mit dem Eingang (14E) der Einordnungsvorrichtung (14) verbunden ist, wobei die Eingangsschaltung (12) geeignet ist, um die einzuordnenden Signale (S) in Eingangsströme (IA, IB) zu kodieren und die Eingangsströme (IA, IB) in die Einordnungsvorrichtung (14) einzuspeisen, und
- eine Ausgangsschaltung (18), die elektrisch mit der Einordnungsvorrichtung (14) verbunden ist, die Ausgangsschaltung (18) umfassend einen Speicher (48) und eine Erkennungs- und Assoziierungsschaltung (50),
wobei der Speicher (48) geeignet ist, um eine Liste von vordefinierten Kategorien (C) zu speichern, wobei jede vordefinierte Kategorie (C) mit mindestens einem Bereich von vordefinierten Strömen assoziiert ist und mindestens ein Neuron (16) der mindestens einen Kette (30) von Neuronen mit einer vordefinierten Kategorie (C) assoziiert ist, und die Erkennungs- und Assoziierungsschaltung (50) geeignet ist, um mindestens eine Änderung de Magnetisierungsmusters mindestens eines Neurons (16) der Neuronenanordnung zu erfassen und das mindestens eine Neuron (16) mit einer Änderung des Magnetisierungsmusters einer vordefinierten Kategorie (C) basierend auf der Liste der vordefinierten Kategorien (C) zu assoziieren.

7. Einordnungsanordnung (10) nach Anspruch 6, wobei die Eingangsschaltung (12) eine Kodiereinheit (26) umfasst, die konfiguriert ist, um die Signale (S), die in die Eingangsströme (IA, IB) einzuordnen sind, zu kodieren.

8. Einordnungsanordnung (10) nach Anspruch 6 oder 7, ferner umfassend eine Anpassungsschaltung (20) zum Anpassen der Magnetisierung jedes der Neuronen (16), wobei die Anpassungsschaltung (20) elektrisch mit der mindestens einen Kette (30) von Neuronen verbunden ist, wobei die Anpassungsschaltung (20) geeignet ist, um unterschiedliche Anpassungsströme (Ij) in jedes Neuron (16) einzuspeisen, wobei die Anpassungsströme (Ij) geeignet sind, um den Wert des Stroms zu steuern, der jedes Neuron (16) der mindestens einen Kette (30) versorgt, und eine Synchronisationsschaltung (22), die zwischen der Eingangsschaltung (12) und der Anpassungsschaltung (20) verbunden ist, um die Injektion der Eingangsströme (IA, IB) und der Anpassungsströme (Ij) in die Neuronen (16) zu synchronisieren.

9. Verfahren (100) zum Einordnen von Signalen (S) in Kategorien (C), das von einer Einordnungsanordnung (10) nach einem der Ansprüche 6 bis 8 durchgeführt wird, wobei jedes einzuordnende Signal (S) in eine vordefinierte Kategorie (C) eingeordnet werden soll, die diesem Signal (S) entspricht, wobei das Verfahren eine Betriebsphase (300) der Einordnungsanordnung (10) umfasst, wobei die Betriebsphase (300) die folgenden Schritte umfasst:
- Bereitstellen mindestens eines einzuordnenden Signal (S) an die Eingangsschaltung (12),
- Bereitstellen einer Liste von vordefinierten Kategorien (C) für die Ausgangsschaltung (18), wobei jede vordefinierte Kategorie (C) mit mindestens einem Bereich von vordefinierten Strömen assoziiert ist und mindestens ein Neuron (16) der Kette (30) von Neuronen mit einer vordefinierten Kategorie (C) assoziiert ist, wobei der Übergang von einer Konfiguration zu einer anderen Konfiguration für das mindestens eine Neuron (16) erfolgt, wenn ein Eingabestrom (IA, IB), der zu dem mindestens einen Bereich von vordefinierten Strömen einer vordefinierten Kategorie (C) gehört, die mit dem mindestens einen Neuron (16) assoziiert ist, auf das Neuron (16) angewandt wird,
- Umwandeln des mindestens einen einzuordnenden Signals (S) mit der Eingangsschaltung (12) in mindestens einen Eingangsstrom (IA, IB),
- Einspeisen des mindestens einen Eingangsstroms (IA, IB) in den Eingang der Vorrichtung (14) zur Einordnung mit der Eingangsschaltung (12),
- Erkennen einer Änderung des Magnetisierungsmusters von mindestens einem Neuron (16) der mindestens einen Kette (30) von Neuronen mit der Erkennungs- und Assoziierungsschaltung (50) als Folge der Injektion des mindestens einen Eingangsstroms (IA, IB),
- Assoziieren des mindestens einen Neurons (16), das eine Änderung des Magnetisierungsmusters aufweist, mit einer vordefinierten Kategorie (C) basierend auf der Liste von Kategorien (C), die mit der Erkennungs- und Assoziierungsschaltung (50) vordefiniert werden, und
- Einordnen des mindestens einen einzuordnenden Signals (S) in die vordefinierte Kategorie (C),
wobei das Verfahren vorzugsweise eine Anfangsphase (200) umfasst, in der eine oder mehrere Eigenschaften der Neuronen (16) der mindestens einen Kette (30) von Neuronen abhängig von der Liste der vordefinierten Kategorien (C) bestimmt werden.

10. Verfahren nach Anspruch 9, wobei, wenn das mindestens eine einzuordnende Signal (S) in eine falsche vordefinierte Kategorie (C) eingeordnet wird, das Verfahren (100) ferner einen Lernschritt (400) zum Steuern der Änderung des Magnetisierungsmusters mindestens eines Neurons (16) der mindestens einen Kette (30) von Neuronen umfasst, indem das einzuordnende Signal (S) erneut gesendet wird und mit der Anpassungsschaltung (20) mindestens ein Anpassungsstrom (Iⱼ) in das mindestens eine Neuron (16) der mindestens einen Kette (30) von Neuronen einspeist.

## Claims

1. A device (14) for classifying signals (S), each signal (S) being intended to be classified in a predefined category (C) corresponding to this signal (S), at least one range of predefined currents being associated with each predefined category (C), the device (14) comprising :
- at least one chain (30) of neurons comprising a set of neurons (16), each neuron (16) having a magnetisation capable of exhibiting a first configuration and a second configuration, the neurons (16) of a chain (30) being connected to one another in series, at least one neuron (16) of the at least one chain (30) of neurons also being associated with a predefined category (C),
- an input (14E) suitable for receiving input currents (IA, IB) representative of the signals (S) to be classified and intended to feed at least one chain of neurons (30),
the magnetisation of at least one neuron (16) of the at least one chain (30) of neurons being capable of switching from one configuration to another configuration from among the first configuration and the second configuration as a function of an input current (IA, IB) applied to the at least one chain (30) of neurons, the switching from one configuration to another configuration for the at least one neuron (16) taking place when an input current (IA, IB) belonging to the at least one range of predefined currents of a predefined category (C) associated with the at least one neuron (16) is applied to said neuron (16).

2. The classification device (14) according to claim 1, wherein each input current (IA, IB) is a current pulse.

3. The classification device (14) according to claim 1 or 2, wherein each neuron (16) is a switch, each neuron (16) being a switch selected from the following list of switches:
- a switch comprising a magnetic tunnel junction (35),
- a switch having a spin-orbit pair, each neuron (16) comprising a first layer (32) of a first material and a second layer (34) of a second material, the first material being either a heavy metal or a ferromagnetic material and the second material being the other of the heavy metal and the ferromagnetic material, the first layer (32) and the second layer (34) being superposed along a stacking direction (E) of the layers, and
- a switch comprising a first layer (44) and at least one second layer (35), the first layer (44) being made of a heavy metal and the at least one second layer being formed by a magnetic tunnel junction (35), the first layer (44) and the second layer (35) being stacked in a stacking direction (E) of the layers.

4. The device (14) according to any one of claims 1 to 3, in which at least two neurons (16) of the chain (30) have a different characteristic chosen from diameter and thickness.

5. The classification device (14) according to any one of claims 1 to 4, comprising a single chain (30) of neurons, the input (14E) being intended to supply the single chain (30) of neurons with input currents (IA, IB) representative of the signals (S) to be classified successively.

6. Assembly (10) for classifying signals (S) capable of classifying each signal (S) in a predefined category (C) corresponding to this signal, the assembly (10) comprising:
- a classification device (14) according to any one of claims 1 to 5,
- an input circuit (12) electrically connected to the input (14E) of the classification device (14), the input circuit (12) being suitable for encoding the signals (S) to be classified into input currents (IA, IB) and for injecting the input currents (IA, IB) into the classification device (14), and
- an output circuit (18) electrically connected to the classification device (14), the output circuit (18) comprising a memory (48) and a detection and association circuit (50),
the memory (48) being suitable for storing a list of predefined categories (C), each predefined category (C) being associated with at least one range of predefined currents and at least one neuron (16) of the at least one chain (30) of neurons being associated with a predefined category (C), and the detection and association circuit (50) being suitable for detecting at least one change in magnetisation configuration of at least one neuron (16) of the neuron set and for associating the at least one neuron (16) having a change in magnetisation configuration with a predefined category (C) on the basis of the list of predefined categories (C).

7. The classification assembly (10) according to claim 6, wherein the input circuit (12) comprises an encoding unit (26) configured to encode the signals (S) to be classified in the input currents (IA, IB).

8. The classification assembly (10) according to claim 6 or 7, further comprising a circuit (20) for adjusting the magnetisation of each of the neurons (16), the adjustment circuit (20) being electrically connected to the at least one chain (30) of neurons, the adjustment circuit (20) being suitable for injecting different adjustment currents (Ij) into each neuron (16), the adjustment currents (Ij) being suitable for controlling the value of the current supplying each neuron (16) of the at least one chain (30) and a synchronisation circuit (22) connected between the input circuit (12) and the adjustment circuit (20) for synchronising the injection of the input currents (IA, IB) and the adjustment currents (Ij) into the neurons (16).

9. A method (100) for classifying signals (S) in categories (C) implemented by a classification assembly (10) according to any one of claims 6 to 8, each signal (S) to be classified being intended to be classified in a predefined category (C) corresponding to this signal (S), the method comprising a phase (300) of operation of the classification assembly (10), the operation phase (300) comprising the following steps:
- providing the input circuit (12) with at least one signal (S) to be classified,
- providing the output circuit (18) with a list of predefined categories (C), each predefined category (C) being associated with at least one range of predefined currents and at least one neuron (16) of the chain (30) of neurons being associated with a predefined category (C), the transition from one configuration to another configuration for the at least one neuron (16) taking place when an input current (IA, IB) belonging to the at least one range of predefined currents of a predefined category (C) associated with the at least one neuron (16) is applied to said neuron (16),
- converting the at least one signal (S) to be classified into at least one input current (IA, IB) with the input circuit (12),
- injecting the at least one input current (IA, IB) at the input of the classification device (14) with the input circuit (12),
- detecting a change in magnetisation configuration of at least one neuron (16) of the at least one chain (30) of neurons with the detection and association circuit (50) following injection of the at least one input current (IA, IB),
- associating the at least one neuron (16) having a change in magnetisation pattern with a predefined category (C) on the basis of the list of predefined categories (C) with the detection and association circuit (50), and
- classifying the at least one signal (S) to be classified in said predefined category (C),
the method preferably comprising an initial phase (200) during which one or more characteristics of the neurons (16) of the at least one chain (30) of neurons are determined as a function of the list of predefined categories (C).

10. The method according to claim 9, wherein when the at least one signal (S) to be classified is classified in an erroneous predefined category (C), the method (100) further comprises a learning step (400) for controlling the change in magnetisation configuration of at least one neuron (16) of the at least one chain (30) of neurons by re-sending the signal (S) to be classified and injecting with the adjustment circuit (20) at least one adjustment current (Iⱼ) into the at least one neuron (16) of the at least one chain (30) of neurons.
